# EUROPEAN PATENT APPLICATION

(11) **EP 4 582 177 A1**
(43) Date of publication of application: **09.07.2025**
(21) Application number: 24210055.0
(22) Date of filing: 31.10.2024
(51) Int. Cl.: B01J 20/04, B01J 20/08, B01J 20/22, B01J 20/26, B01J 20/30

(54) **LITHIUM ADSORBENT, AND PREPARATION METHOD AND APPLICATION THEREOF**

(30) Priority: 14.11.2023 CN 202311512340
(71) Applicant: Sunresin New Materials Co. Ltd., Xi'an, Shaanxi 710076 (CN)
(72) Inventor: LIU, Heng, Xi'an, 710076 (CN); LIU, Qiong, Xi'an, 710076 (CN); LI, Suidang, Xi'an, 710076 (CN); KOU, Xiaokang, Xi'an, 710076 (CN)
(74) Representative: J A Kemp LLP

(57) **Abstract**

Disclosed are a lithium adsorbent, and a preparation method and an application thereof, which relate to the technical of extraction of lithium. The method of the disclosure includes obtaining a lithium adsorbent intermediate by mixing an oil phase with an aqueous phase; and obtaining the lithium adsorbent by mixing the lithium adsorbent intermediate with an organic auxiliary agent; where the oil phase includes a lithium source, an aluminum source, an oil-phase matrix, and an oil-phase auxiliary agent, and the oil-phase matrix includes a high-molecular polymer and vinylidene fluoride; the mixing an oil phase with an aqueous phase includes performing gradient stirring on a mixture of the oil phase and the aqueous phase. According to the disclosure, the high-stability lithium adsorbent can be prepared by optimizing and screening the high-temperature resistant oil-phase matrix and a specific preparation process. Compared with an existing lithium adsorbent, the lithium adsorbent prepared through the disclosure has less degradation, better mechanical strength, and stronger corrosion resistance in a high-temperature environment, and therefore a way of effectively extracting lithium resources from high-temperature and high-salt brine is provided.

## Description

### TECHNICAL FIELD

The disclosure relates to the technical field of extraction of lithium, and in particular to a lithium adsorbent, and a preparation method and an application thereof.

### BACKGROUND

Lithium resources are currently regarded as core new resources, but are highly possible in short supply for a long time in the future because of continuous unbalance between demand and supply. Therefore, extraction of lithium from geothermal brine has become a new hot topic.

However, it is a major challenge to extract lithium from geothermal brine because extraction of a lithium element from high-temperature geothermal brine requires solving the physical and chemical stability of adsorbents. Current lithium adsorbents are likely to generate physical damage, chemical attenuation, etc. in a high-temperature environment, which shortens the service life of lithium adsorbents and leads to a too high industrial use cost of lithium adsorbents. It is a pressing issue to develop an adsorbent that can be used stably in high-temperature brine and efficiently extract lithium.

In view of the above, the disclosure is provided.

### SUMMARY OF THE INVENTION

An objective of the disclosure is to provide a lithium adsorbent, and a preparation method and an application thereof.

The disclosure is implemented as follows:
In a first aspect, a method for preparing a lithium adsorbent is provided in examples of the disclosure. The method includes: obtaining a lithium adsorbent intermediate by mixing an oil phase with an aqueous phase; and obtaining the lithium adsorbent by mixing the lithium adsorbent intermediate with an organic auxiliary agent; where the oil phase includes a lithium source, an aluminum source, an oil-phase matrix, and an oil-phase auxiliary agent, and the oil-phase matrix includes a high-molecular polymer and vinylidene fluoride; the step of mixing an oil phase with an aqueous phase includes performing gradient stirring on a mixture of the oil phase and the aqueous phase; and the step of gradient stirring includes stirring the mixture at an initial stirring speed, where the initial stirring speed is in a range from 30 rpm to 190 rpm; stopping stirring the mixture for second set time each time after stirring the mixture for first set time; reducing the stirring speed by set rotation speed 1 after each stopping, then continuing stirring the mixture, and not stopping stirring the mixture until a stirring speed is less than or equal to set rotation speed 2, where set rotation speed 2 is in a range from 10 rpm to 30 rpm; and maintaining set rotation speed 2 and stirring at 40°C to 120°C for 20 min to 600 min.

In a second aspect, a lithium adsorbent is provided in the examples of the disclosure. The lithium adsorbent includes the lithium adsorbent prepared through the method according to the above example.

In a third aspect, an application of the lithium adsorbent according to the above example in extracting lithium or preparing a product used for extracting lithium.

The disclosure has the beneficial effects as follows:
According to the disclosure, a new preparation process is developed, and the high-stability lithium adsorbent is prepared by screening a high-temperature resistant organic matrix and a specific preparation process. Compared with an existing lithium adsorbent, the lithium adsorbent prepared through the disclosure has less degradation, better mechanical strength, and stronger corrosion resistance in a high-temperature environment, and therefore a way of effectively extracting lithium resources from high-temperature and high-salt brine is provided.

### BRIEF DESCRIPTION OF THE DRAWINGS

In order to describe the technical solutions in examples the disclosure more clearly, a brief description of the accompanying drawings required for describing the examples will be provided below. It should be understood that the following accompanying drawings show merely some examples of the disclosure, and therefore should not be deemed as limiting the scope. Those of ordinary skill in the art can also derive other accompanying drawings from these accompanying drawings without creative efforts.

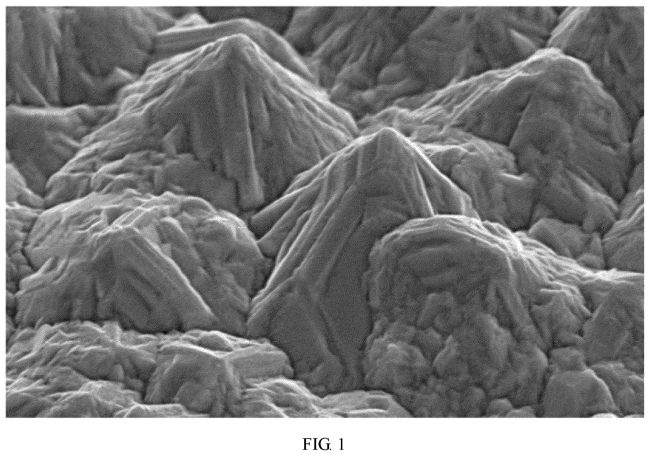

Fig. 1 is an electron microscope image of a lithium adsorbent prepared in Example 1.

### DETAILED DESCRIPTION

In order to make the objectives, technical solutions, and advantages in examples of the disclosure clearer, the technical solutions in the examples of the disclosure will be clearly and completely described below. The examples are performed according to conventional conditions or conditions recommended by a manufacturer if specific conditions are not indicated. Reagents or instruments used are conventional products commercially available if the manufacturer is not indicated.

A novel lithium adsorbent prepared through the disclosure can be free of attenuation after 2000 or more cycles of adsorption and analysis in brine at a high temperature of 80°C. A conventional lithium adsorbent shows obvious attenuation after 100 or more cycles or adsorption and analysis in brine at a high temperature of 80°C.

In an aspect, a method for preparing a lithium adsorbent is provided in the examples of the disclosure. The method includes a lithium adsorbent intermediate is obtained by mixing an oil phase with an aqueous phase; and the lithium adsorbent is obtained by mixing the lithium adsorbent intermediate with an organic auxiliary agent; where
the oil phase includes a lithium source, an aluminum source, an oil-phase matrix, and an oil-phase auxiliary agent, and the oil-phase matrix includes a high-molecular polymer and vinylidene fluoride;
the step of mixing an oil phase with an aqueous phase includes gradient stirring is performed on a mixture of the oil phase and the aqueous phase; and the step of gradient stirring includes the mixture is stirred at an initial stirring speed, where the initial stirring speed is in a range from 30 rpm to 190 rpm; stirring the mixture is stopped for second set time each time after the mixture is stirred for first set time; the stirring speed is reduced by set rotation speed 1 after each stopping, then the mixture continues being stirred, and stirring the mixture is not stopped until a stirring speed is less than or equal to set rotation speed 2, where set rotation speed 2 is in a range from 10 rpm to 30 rpm; and set rotation speed 2 is maintained and for the mixture is stirred at 40°C to 120°C for 20 min to 600 min. A polymerization process can better bind lithium aluminum oxide crystallites, and a polymerization process of the vinylidene fluoride in oil droplets is milder by reducing the stirring speed in a gradient manner. The stirring speed is continuously reduced after the vinylidene fluoride begins to polymerize. Therefore, polymer structures in the oil droplets do not collapse obviously, and an amount of aluminum and lithium escaping into the aqueous phase can be reduced in this way.

The lithium adsorbent prepared through the method provided by the disclosure realizes high-temperature resistance primarily in two aspects: in one aspect, the vinylidene fluoride is unlikely to be broken in a high-temperature environment by selecting a special organic matrix. The lithium aluminum hydroxide (lithium aluminum oxide) crystallites are better bound by mixing a resin matrix that is unlikely to generate chemical destruction as the oil-phase matrix with the high-molecular polymer. An amount of desorption of active crystals is smaller because of firmer binding. Along with high-temperature adsorption and analysis, the organic matrix has a small skeleton change. Moreover, the high-temperature adsorption and low-temperature analysis cause contraction and expansion of an organic skeleton to be smaller. Accordingly, repeated adsorption and desorption of lithium ions in the high-temperature environment have less structural destruction. In a second aspect, a special preparation process is used. In a process of preparing the lithium adsorbent intermediate, lithium aluminum oxide crystallites in adsorbent particles are distributed more uniformly after gradient stirring is used in a process of mixing the oil phase with the aqueous phase. Therefore, a binding force on active inorganic sites is stronger, escape of aluminum and lithium is reduced, and adsorption and desorption of lithium chloride in the high-temperature environment are stabler.

In some examples, the initial stirring speed may be any one or in a range between any two of 30 rpm, 40 rpm, 60 rpm, 80 rpm, 100 rpm, 120 rpm, 140 rpm, 160 rpm, 170 rpm, 180 rpm, and 190 rpm.

In some examples, the first set time is in a range from 20 min to 120 min. The first set time may specifically be any one or in a range between any two of 20 min, 40 min, 60 min, 80 min, 100 min, and 120 min.

In some examples, the second set time is in a range from 20 min to 120 min. The second set time may specifically be any one or in a range between any two of 20 min, 40 min, 60 min, 80 min, 100 min, and 120 min.

In some examples, set rotation speed 1 is in a range from 10 rpm to 30 rpm. Set rotation speed 1 may specifically be any one or in a range between any two of 10 rpm, 12 rpm, 14 rpm, 16 rpm, 18 rpm, 20 rpm, 22 rpm, 24 rpm, 26 rpm, 28 rpm, and 30 rpm.

In some examples, set rotation speed 2 is in a range from 10 rpm to 30 rpm. Set rotation speed 2 may specifically be any one or in a range between any two of 10 rpm, 12 rpm, 14 rpm, 16 rpm, 18 rpm, 20 rpm, 22 rpm, 24 rpm, 26 rpm, 28 rpm, and 30 rpm.

In some examples, a stirring temperature before set rotation speed 2 is maintained is in a range from 40°C to 80°C. The stirring temperature may specifically be any one or in a range between any two of 40°C, 42°C, 44°C, 46°C, 48°C, 50°C, 52°C, 54°C, 56°C, 58°C, 60°C, 62°C, 64°C, 66°C, 68°C, 70°C, 72°C, 74°C, 76°C, 78°C, and 80°C.

In some examples, a stirring temperature after set rotation speed 2 is maintained is any one or in a range between any two of 40°C, 45°C, 50°C, 55°C, 60°C, 65°C, 70°C, 75°C, 80°C, 85°C, 90°C, 95°C, 100°C, 105°C, 110°C, 115°C, and 120°C.

In some examples, a mass ratio of the high-molecular polymer to the vinylidene fluoride in the oil-phase matrix is 5:(1-10). The mass ratio may specifically be any one or in a range between any two of 5:1, 5:2, 5:3, 5:4, 5:5, 5:6, 5:7, 5:8, 5:9, and 5:10.

In some examples, the high-molecular polymer includes any one or more of **polyacrylamide,** polyacrylic acid, polyacrylate, polyurethane, polyester, polyether, polystyrene, polyenol, phenolic resin, and epoxy resin. The polystyrene or polyacrylate is preferred, which has a stronger affinity for the vinylidene fluoride, so that the adsorbent prepared has better strength.

In some examples, a mass ratio of the lithium source and the aluminum source in total to the oil-phase auxiliary agent is (3-18):10. The mass ratio may specifically be any one or in a range between any two of 3:10, 4:10, 6:10, 8:10, 10:10, 12:10, 14:10, 16:10, and 18:10.

In some examples, the oil-phase auxiliary agent includes N-methyl pyrrolidone and an organic solvent.

In some examples, a mass ratio of the N-methyl pyrrolidone to the organic solvent is (1-5):1. The mass ratio may specifically be any one or in a range between any two of 1:1, 2:1, 3:1, 4:1, and 5:1.

In some examples, the organic solvent in the oil-phase auxiliary agent includes any one or more of methanol, ethanol, acetone, gasoline, N,N-dimethylformamide, ethyl acetate, dichloromethane, chloroform, benzene, toluene, isopropanol, and diethyl ether.

In some examples, a mixing volume ratio of the oil phase to the aqueous phase is 1:(1-3). The volume ratio may specifically be any one or in a range between any two of 1:1, 1:2, and 1:3.

In some examples, a molar ratio of the lithium source to the aluminum source is 5:(1-10). The molar ratio may specifically be any one or in a range between any two of 5:1, 5:2, 5:3, 5:4, 5:5, 5:6, 5:7, 5:8, 5:9, and 5:10.

In some examples, the lithium source includes a lithium salt.

In some examples, the lithium source includes any one or more of lithium chloride, lithium nitrate, lithium carbonate, lithium sulfate, lithium hydroxide, lithium acetate, and lithium oxide.

In some examples, the aluminum source includes an aluminum salt.

In some examples, the aluminum source includes any one or more of aluminum chloride, aluminum nitrate, aluminum carbonate, aluminum sulfate, aluminum hydroxide, aluminum acetate, and aluminum oxide.

In some examples, the oil phase further includes at least one of an initiator and a pore-forming agent.

In some examples, the initiator includes any one or more of benzoyl peroxide, cumene hydroperoxide, and tert-butyl hydroperoxide.

In some examples, the pore-forming agent includes any one or more of white oil, liquid wax, gasoline, and n-octane.

In some examples, the aqueous phase includes water and a dispersant.

In some examples, a mass volume fraction of the dispersant in the aqueous phase is in a range from 0.1% to 2%. The mass volume fraction may specifically be any one or in a range between any two of 0.1%, 0.2%, 0.3%, 0.4%, 0.5%, 0.6%, 0.7%, 0.8%, 1.0%, 1.2%, 1.4%, 1.6%, 1.8, and 2%. Specifically, the mass volume fraction=g/mL×100%.

In some examples, the dispersant includes any one or more of carboxymethyl cellulose and hydroxyethyl cellulose.

In some examples, after the oil phase is mixed with the aqueous phase, before the step that the lithium adsorbent intermediate obtained is mixed with an organic auxiliary agent, the method further includes the pore-forming agent is removed by washing a product obtained after the oil phase is mixed with the aqueous phase with detergent 1.

In some examples, detergent 1 includes any one or more of methanol, ethanol, acetone, gasoline, N,N-dimethylformamide, ethyl acetate, dichloromethane, chloroform, benzene, toluene, isopropanol, and diethyl ether.

In some examples, the organic auxiliary agent includes any one or more of polyvinyl alcohol, polylactic acid, cellulose acetate, ethyl cellulose, polyvinyl chloride, polycarbonate, a vinyl alcohol-ethylene cellulose copolymer, and an ethylene-propylene polymer.

In some examples, a mass ratio of the lithium adsorbent intermediate to the organic auxiliary agent is 20:(1-8). The mass ratio may specifically be any one or in a range between any two of 20:1, 20:2, 20:3, 20:4, 20:5, 20:6, 20:7, and 20:8.

In some examples, a condition of mixing the lithium adsorbent intermediate with the organic auxiliary agent includes a temperature of 30°C to 80°C, and time of 1 h to 6 h. The temperature may specifically be any one or in a range between any two of 30°C, 35°C, 40°C, 45°C, 50°C, 55°C, 60°C, 65°C, 70°C, 75°C, and 80°C. The time may specifically be any one or in a range between any two of 1 h, 1.5 h, 2 h, 2.5 h, 3 h, 3.5 h, 4 h, 4.5 h, 5 h, 5.5 h, and 6 h.

In some examples, the method further includes, during the mixing of the lithium adsorbent intermediate with the organic auxiliary agent, a polar organic solvent is added to the mixing system.

In some examples, the polar organic solvent includes any one or more of ethanol, N,N-dimethylformamide, acetonitrile, and isopropanol.

In some examples, a concentration of the polar organic solvent is in a range from 15% to 35%. The concentration may specifically be any one or in a range between any two of 15%, 16%, 18%, 20%, 22%, 24%, 26%, 28%, 30%, 32%, 34%, and 35%.

In some examples, the method further includes, after mixing of the lithium adsorbent intermediate with the organic auxiliary agent, a product obtained after mixing the lithium adsorbent intermediate with the organic auxiliary agent is washed with detergent 2.

In some examples, detergent 2 includes water and/or an organic solvent. Optionally, the organic solvent in detergent 2 includes any one or more of methanol, ethanol, acetone, gasoline, N,N-dimethylformamide, ethyl acetate, dichloromethane, chloroform, benzene, toluene, isopropanol, N-methyl pyrrolidone, and diethyl ether.

In some examples, the method further includes, after washing the product with detergent 2, the product washed with detergent 2 is dried to obtain the lithium adsorbent.

In another aspect, a lithium adsorbent is further provided in the examples of the disclosure. The lithium adsorbent includes the lithium adsorbent prepared through the method according to any example described above.

In addition, an application of the lithium adsorbent according to any example described above in extracting lithium or preparing a product used for extracting lithium is further provided in the examples of the disclosure.

In some examples, the extracting lithium includes lithium is extracted at a high temperature. In some examples, the high temperature is in a range from 50°C to 85°C, and may specifically be any one or in a range between any two of 50°C, 55°C, 60°C, 65°C, 70°C, 75°C, 80°C, and 85°C.

In some examples, extracting lithium includes extracting lithium from high-temperature geothermal brine.

Features and performance of the disclosure are further described in detail below in conjunction with the examples.

### Example 1

A method for preparing a lithium adsorbent includes the following steps.

### (1) Oil phase

Firstly, 50 g of aluminum chloride (an aluminum source) were added to 100 mL of a mixed solution (an oil-phase auxiliary agent) of N,N-dimethylformamide and N-methyl pyrrolidone, where a mass ratio of the N,N-dimethylformamide to the N-methyl pyrrolidone was 1:4. Secondly, 70 mL of 3 mol/L LiOH solutions (a lithium source) were added under stirring, and then an oil-phase matrix (30 g polystyrene+30 g vinylidene fluoride) was added and stirred to dissolve, so as to obtain an oil phase. 2 g benzoyl peroxide (an initiator) and 40 g liquid wax (a pore-forming agent) were added to the oil phase, and a final oil phase was obtained through stirring and mixing for 20 min.

### (2) Aqueous phase

Firstly, 300 mL of water were poured into a 2000-mL reaction kettle, and 0.5 g of carboxymethyl cellulose (a dispersant) was added and stirred to dissolve, so as to form the aqueous phase.

### (3) Lithium adsorbent intermediate

The above oil-phase liquid was poured into the aqueous phase, and gradient stirring was performed to rapidly disperse the oil-phase liquid into spheres. The gradient stirring includes a temperature was increased to 60°C, where an initial stirring speed was 180 rpm; the stirring of the mixture was stopped for 10 min every 2 h, the stirring speed was reduced by 20 rpm (a lowest rotation speed) when the mixture was re-stirred, and the process was repeated until the stirring speed was reduced to be less than or equal to 20 rpm; and a temperature was increased to 80°C, 20 rpm was maintained for a reaction for 2 h, and spherical particles were filtered out after heat preservation was finished.

### (4) Lithium adsorbent

Firstly, the liquid wax (the pore-forming agent) was washed away by adding 200 g of isopropanol (detergent 1) to the spherical particles. Then, a mixed solution was obtained by dissolving 15 g of polylactic acid (an organic auxiliary agent) in 300 g of polar organic solvents containing water and ethanol (at a volume ratio of 1:1). 100 g of spherical particles were added to the reaction kettle, and 300 g of mixed solutions were added. A temperature was increased to 70°C for a reaction for 6 h. Finally, a product was washed with acetone (detergent 2), and spherical adsorbents were obtained by removing the acetone with water. Adsorbents having a particle size of 0.6 mm-2.0 mm were screened as products for a test.

An electron microscope image of the lithium adsorbent prepared in the example is shown in Fig. 1.

A column chromatography adsorption experiment was performed on the basis of brine. See Table 1 for components of the brine.

**Table 1. Composition of brine**

| Ion content (ppm) | | | | | | | | |
|---|---|---|---|---|---|---|---|---|
| Cation | Lithiu m | Magne sium | Calcium | Sodium | Potassi um | Strontiu m | Barium | Iron |
| Content | 248.9 | 25126 | 31910 | 89201 | 15832 | 631 | 2.3 | 5.9 |
| Anion | Borate (B(OH)⁴⁻) | | Chloride ion | Sulfate radical | Bicarb onate radical | Bromide ion | Fluoride ion | - |
| Content | 3235 | | 222610 | 34 | 562 | 1902 | 15 | - |

The brine was heated for adsorption, where an adsorption speed was 3 bed volume (BV)/h, an adsorption capacity of the brine was 8 BV, and an average lithium loading capacity of resin after 1-5 cycles of adsorption was 2.31 g/L. Then, 300 cycles of a brine-water impact test were performed on the resin by means of a permeation testing device, where the brine was at 80°C, and the water was at 40°C. After the test was completed, a mass loss of the adsorbent was 0.14%. An average lithium loading capacity after 5 cycles was re-tested as 2.27 g/L under same conditions.

### Example 2

Lithium adsorbents were prepared in 5 experimental groups set with reference to the method for preparing a lithium adsorbent according to Example 1, respectively. An experimental group 1 was performed as those in Example 1, and groups 2-4 were performed substantially as those in Example 1, with differences shown in Table 2. After the lithium adsorbents were prepared, column chromatography adsorption experiments were performed on the basis of brine, where components of the brine are as those shown in Table 1. The brine was heated for adsorption, where an adsorption speed was 3 BV/h, an adsorption capacity of the brine was 8 BV, and an average lithium loading capacity of resin after 1-5 cycles of adsorption was 2.01g/L. Then, 300 cycles of a brine-water impact test were performed on the resin by means of a resin life testing device, where the brine was at 80°C, and the water was at 40°C. The results are shown in Table 2.

**Table 2. Experimental group**

| Group number | Oil-phase auxiliary agent in step (1) | Oil-phase matrix in step (1) | Whether gradient stirring was performed in step (3), initial stirring speed, and each reduction amount of gradient stirring | Adsorptio n amount attenuatio n after 300 cycles | Mass attenuatio n after 300 cycles | Average lithium loading capacity obtained after 5 cycles and re-tested under same conditions |
|---|---|---|---|---|---|---|
| 1 | Mass ratio of N,N-dimethylformam ide to N-methyl pyrrolidone is 1:4 | 30gof polystyrene+30 g of vinylidene fluoride | Yes 180 rpm, 20 rpm/1 h | 1.7% | 0.14% | 2.27 g/L |
| 2 | Mass ratio of N,N-DIMETHYLFORM AMIDE to N-methyl pyrrolidone is 1:4 | 60 g of polystyrene | Yes 180 rpm, 20 rpm/1 h | 36.7% | 9.34% | 1.47g/L |
| 3 | Mass ratio of N,N-DIMETHYLFORM AMIDE to N-methyl pyrrolidone is 1:4 | 30 g of polystyrene+30 g of vinylidene fluoride | No | 8.8% | 3.25% | 1.94 g/L |
| 4 | Mass ratio of N,N-DIMETHYLFORM AMIDE to N-methyl pyrrolidone is 1:1 | 40 g of polystyrene+20 g of vinylidene fluoride | Yes 180 rpm, 20 rpm/1 h | 4.1% | 2.1% | 1.87 g/L |
| 5 | N,N-DIMETHYLFORM AMIDE | 30 g of polystyrene+30 g of polyurethane | No | 23.8% | 7.1% | 1.32 g/L |
| 6 | Mass ratio of N,N-DIMETHYLFORM AMIDE to N-methyl pyrrolidone is 1:4 | 30 g of polystyrene+30 g of vinylidene fluoride | Yes 180 rpm, 10 rpm/1 h | 7.6% | 4.52% | 1.96 g/L |
| 7 | Mass ratio of N,N-DIMETHYLFORM AMIDE to N-methyl pyrrolidone is 1:4 | 30 g of polystyrene+30 g of vinylidene fluoride | Yes 90 rpm, 20 rpm/1 h | 5.7% | 6.13% | 1.88 g/L |

Gradient stirring was not performed on group 3. Step (3) was specifically as follows: an oil-phase liquid was poured into an aqueous phase, and rapidly dispersed into spheres by adjusting a stirring speed; a temperature was increased to 60°C, and then the mixture was started to be stirred, where a stirring speed was 180 rpm; a reaction was performed for 8 h, and then a temperature was increased to 80°C, and a reaction was performed for 2 h at a stirring speed of 180 rpm; and spherical particles were filtered out after heat preservation is finished.

What are described above are merely the preferred examples of the disclosure, but are not intended to limit the disclosure. Those skilled in the art can make various modifications and variations to the disclosure. Any modifications, equivalent replacements, improvements, etc. made within the spirit and principles of the disclosure should fall within the scope of protection of the disclosure.

## Claims

1. A method for preparing a lithium adsorbent, comprising: obtaining a lithium adsorbent intermediate by mixing an oil phase with an aqueous phase; and obtaining the lithium adsorbent by mixing the lithium adsorbent intermediate with an organic auxiliary agent; wherein
the oil phase comprises a lithium source, an aluminum source, an oil-phase matrix, and an oil-phase auxiliary agent, and the oil-phase matrix comprises a high-molecular polymer and vinylidene fluoride;
the step of mixing an oil phase with an aqueous phase comprises: performing gradient stirring on a mixture of the oil phase and the aqueous phase; and
the step of gradient stirring comprises: stirring the mixture at an initial stirring speed, wherein the initial stirring speed is in a range from 30 rpm to 190 rpm; stopping stirring the mixture for second set time each time after stirring the mixture for first set time; reducing the stirring speed by set rotation speed 1 after each stopping, then continuing stirring the mixture, and not stopping stirring the mixture until a stirring speed is less than or equal to set rotation speed 2, wherein set rotation speed 2 is in a range from 10 rpm to 30 rpm; and maintaining set rotation speed 2 and stirring at 40°C to 120°C for 20 min to 600 min.

2. The method according to claim 1, wherein the first set time is in a range from 20 min to 120 min;
optionally, the second set time is in a range from 20 min to 120 min;
optionally, set rotation speed 1 is in a range from 10 rpm to 30 rpm; and
optionally, a stirring temperature before maintaining set rotation speed 2 is in a range from 40°C to 80°C.

3. The method according to claim 1, wherein a mass ratio of the high-molecular polymer to the vinylidene fluoride in the oil-phase matrix is 5:(1-10);
optionally, the high-molecular polymer comprises any one or more of polyacrylamide, polyacrylic acid, polyacrylate, polyurethane, polyester, polyether, polystyrene, polyenol, phenolic resin, and epoxy resin;
optionally, a mass ratio of the lithium source and the aluminum source in total to the oil-phase auxiliary agent is (3-18): 10;
optionally, the oil-phase auxiliary agent comprises: N-methyl pyrrolidone and an organic solvent;
optionally, a mass ratio of the N-methyl pyrrolidone to the organic solvent is (1-5): 1; and
optionally, the organic solvent in the oil-phase auxiliary agent comprises any one or more of methanol, ethanol, acetone, gasoline, N,N-dimethylformamide, ethyl acetate, dichloromethane, chloroform, benzene, toluene, isopropanol, and diethyl ether.

4. The method according to any one of claims 1-3, wherein a mixing volume ratio of the oil phase to the aqueous phase is 1:(1-3);
optionally, a molar ratio of the lithium source to the aluminum source is 5:(1-10);
optionally, the lithium source comprises a lithium salt;
optionally, the lithium source comprises any one or more of lithium chloride, lithium nitrate, lithium carbonate, lithium sulfate, lithium hydroxide, lithium acetate, and lithium oxide;
optionally, the aluminum source comprises an aluminum salt; and
optionally, the aluminum source comprises any one or more of aluminum chloride, aluminum nitrate, aluminum carbonate, aluminum sulfate, aluminum hydroxide, aluminum acetate, and aluminum oxide.

5. The method according to any one of claims 1-3, wherein the oil phase further comprises at least one of an initiator and a pore-forming agent;
optionally, the initiator comprises any one or more of benzoyl peroxide, cumene hydroperoxide, and tert-butyl hydroperoxide;
optionally, the pore-forming agent comprises any one or more of white oil, liquid wax, gasoline, and n-octane;
optionally, the aqueous phase comprises water and a dispersant;
optionally, a mass volume fraction of the dispersant in the aqueous phase is in a range from 0.1% to 2%.
optionally, the dispersant comprises any one or more of carboxymethyl cellulose and hydroxyethyl cellulose;
optionally, after the oil phase is mixed with the aqueous phase, before the mixing of the lithium adsorbent intermediate obtained with an organic auxiliary agent, the method further comprises: removing the pore-forming agent by washing a product obtained after the oil phase is mixed with the aqueous phase with detergent 1; and
optionally, detergent 1 comprises any one or more of methanol, ethanol, acetone, gasoline, N,N-dimethylformamide, ethyl acetate, dichloromethane, chloroform, benzene, toluene, isopropanol, and diethyl ether.

6. The method according to any one of claims 1-3, wherein the organic auxiliary agent comprises any one or more of polyvinyl alcohol, polylactic acid, cellulose acetate, ethyl cellulose, polyvinyl chloride, polycarbonate, a vinyl alcohol-ethylene cellulose copolymer, and an ethylene-propylene polymer;
optionally, a mass ratio of the lithium adsorbent intermediate to the organic auxiliary agent is 20:(1-8); and
optionally, a condition of mixing the lithium adsorbent intermediate with the organic auxiliary agent comprises a temperature of 30°C to 80°C, and time of 1 h to 6 h.

7. The method according to any one of claims 1-3, wherein the method further comprises, during the mixing of the lithium adsorbent intermediate with the organic auxiliary agent, adding a polar organic solvent to the mixing system;
optionally, the polar organic solvent comprises any one or more of ethanol, N,N-dimethylformamide, acetonitrile, and isopropanol;
optionally, the method further comprises, after mixing the lithium adsorbent intermediate with the organic auxiliary agent, washing a product obtained after mixing the lithium adsorbent intermediate with the organic auxiliary agent with detergent 2;
optionally, detergent 2 comprises water and/or an organic solvent;
optionally, the organic solvent in detergent 2 comprises any one or more of methanol, ethanol, acetone, gasoline, N,N-dimethylformamide, ethyl acetate, dichloromethane, chloroform, benzene, toluene, isopropanol, N-methyl pyrrolidone, and diethyl ether; and
optionally, the method further comprises, after washing the product with detergent 2, drying the product washed with detergent 2 to obtain the lithium adsorbent.

8. A lithium adsorbent, comprising the lithium adsorbent prepared through the method according to any one of claims 1-7.

9. An application of the lithium adsorbent according to claim 8 in extracting lithium or preparing a product used for extracting lithium.

10. The application according to claim 9, wherein the extracting of lithium comprises extracting lithium at a high temperature; and
optionally, the extracting of lithium comprises extracting lithium from high-temperature geothermal brine.
